# EUROPEAN PATENT APPLICATION

(11) **EP 3 780 535 A1**
(43) Date of publication of application: **17.02.2021**
(21) Application number: 19191960.4
(22) Date of filing: 15.08.2019
(51) Int. Cl.: H04L 29/06

(54) **PROCESS TO ESTABLISH A COMMUNICATION CHANNEL BETWEEN A CLIENT AND A SERVER**

(71) Applicant: Robert Bosch GmbH, 70442 Stuttgart (DE)
(72) Inventor: Radev, Kaloyan, 1407 Sofia (BG); Deliyski, Nikolay, 1336 Sofia (BG); Djukic, Sinisha, 1618 Sofia (BG)

(57) **Abstract**

The invention relates to a process to establish a communication channel between a client (100) and a server (104) via a broker (102). The client (100) and the broker (102) establish a protected first communication channel (401) and within the first communication channel (401), the client (100) submits a request to establish a communication channel with the server (104). The broker (102) and the server (104) establish a protected second communication channel (402) and within the second communication ch annel (402), the request of the client (100) is forwarded to the server (104). The client (100) and the server (104) establish a third protected communication channel (403) via the broker (102), wherein the third communication channel (403) is protected such that, the broker (102) has no access to a contend of the third communication channel (403).

## Description

### State of the art

The invention relates to a process to establish a communication channel between a client and a server according to the features of the independent claim.

Many mechanisms to establish a trusted, secured and encrypted communication channel between two devices connected to an IP network currently exist. For the most part, such mechanisms focus on typical client-server scenarios, where a client establishes an outgoing connection to a server, followed by a server-side or mutual authentication, and establishment of an encrypted communication channel. Such is the case with typical consumer services, like a web-based online banking system, requiring client authentication by means of credentials (user and password) and, optionally, a secure token or a certificate. Such use cases almost exclusively assume that the communication is always initiated by the client, and that the client knows the server address in advance.

However, modern Internet of Things (IoT) services require a much more flexible communication channel. For example, a typical smart home system installed at user's premises is meant to be accessed remotely from the user's mobile phone even from foreign networks or countries. The initiator of the connection is the application on the mobile phone and it may not know the smart home system's address in advance, or the system may have firewall restrictions on incoming connections in place.

The solution to such a problem usually comes via a third networked device or a system, which acts as a broker relaying the communication between client and server. However, it also introduces:
- Additional security risks due to new attack possibilities, like man-in-the-middle attack, allowing the attacker to spoof identities, tamper the communication, or simply tap into the data transferred;
- Significant privacy concerns over the private data handling of the infrastructure provider, misuse or general mischief by their technical staff.

It is therefore desirable to have a process which:
- Enables devices connected to an IP-network to establish a secure, authenticated and encrypted communication channel between them;
- Utilizes an intermediary communication broker device without terminating the secure channel within the broker, hence achieving a so-called end-to-end secure remote tunnel between client and server alleviating the aforementioned security risks;
- Utilizes network-neutral and protocol-neutral addressing of servers within the broker system (e.g. no IP addresses or host names required);
- Dispels privacy issues, due to the data never being transferred in plain text within the broker's infrastructure.

### Advantages of the invention

The process according to independent claim 1 has the advantage that the third communication channel between the client and server is protected such that, the broker has no access to the content of the third communication channel. By this, the communication between the client and the server becomes more secure and a risk of a manipulation of the communication between the client and the server is reduced.

The features of the dependent claims realize further advantages and improvements of the invention. To identify the server with which the client requests to establish a communication channel the client submits a unique access information.

Based on this unique access information the broker identifies the server and forwards the request to the server. There is no need that the client has a prior knowledge of an address of the server. For the verification of the unique access information, the broker uses a verification information, which is stored in the broker before the client initiates the request to establish a communication channel to the server. This information and the address information is stored in the broker by the second communication channel which has been initiated by the server before the client requests to establish a communication channel with the server. Since the server initiated this second communication channel, this connection is very secure. Further, the server might have restrictions regarding incoming connection requests and might only accept connections, which are initiated by the server. To establish the third communication channel client and server both have credential information, which allow establishing a secure communication channel between the server and the client. This credential information is used to establish the secure communication channel between a server and client. This third communication channel is secure since it is end-to-end encrypted and authenticated by server and client, so that the content of this communication channel is not accessible to anybody but client and server. In addition, the first and second communication channel between the client and the broker and the broker and the server are secure by encryption and authentication. Therefore, the client uses two different security information to authenticate and encrypt an outgoing message. The first security information is used to secure the first communication channel between the client and the broker and the second security information is used to encrypt the third communication channel between client and server. Likewise, any information send by the server is secured by an information shared between server and broker and by an information shared between broker and client. The broker has no access to the content of the third communication channel between the client and the server because the broker has not the information to authenticate or decrypt this third communication channel. For the third communication channel to be protected client and server have to establish an exchange of credential information between client and server without the help of the broker. This can happen either by a direct client and server communication or by a communication of client and server with a trust center. Since client and server both share the credential information, which is unknown to the broker, the broker has no possibility to access the content of the third communication channel.

### Drawings

Examples of the invention are shown in the drawings and further detailed in the description.
- Figure 1: shows a general set up of client, broker and server in a network environment,
- Figure 2: shows the process steps of a pairing phase of server and client,
- Figure 3: the process steps of the process to establish a communication channel between a client and a server via a broker and
- Figure 4: shows a schematic of the communication channels after the communication channel between client and server is established.

### Description

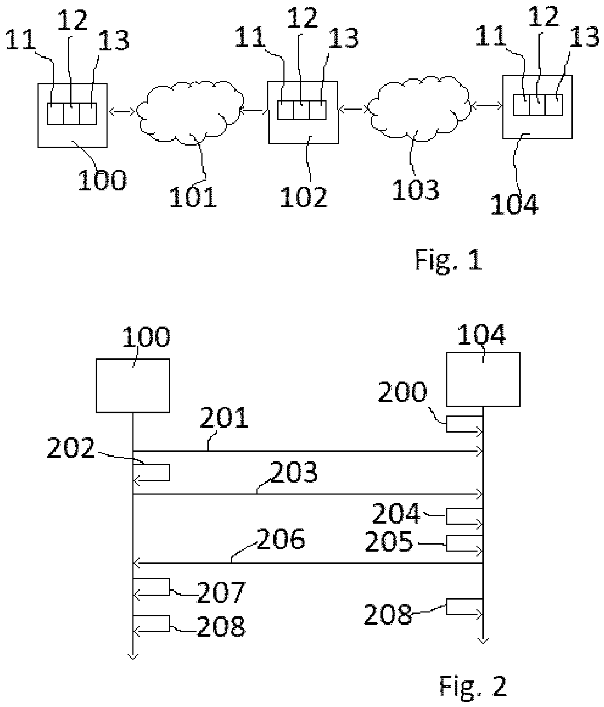

Figure 1 shows a client 100, a broker 102 and a server 104. The client 100 and the broker 102 can be connected over a network typically a TCP/IP network 101. The broker 102 and the server 104 can be connected via a TCP/IP network 103.

The server 104 is a device, which performs some services. One example for such a server is a control device of a heating system in a house. By this control system, the heating in the house can be regulated by preselecting temperatures to be realized in the house and controlling the heating system accordingly. The client device 100 is a device, which requests services from the server device 104. Such a client is as example a mobile phone by which an owner of the house wants to control the heating system remotely without having direct access to the server device 104.

Each of the shown devices the client 100, the broker 102 and the server 104 comprise a processor 11, a memory 12 and a network interface 13. The network interface 13 allows an access to the network 101, 103 to establish a communication channel between the different devices. The memory stores data and programs, which are then processed by the processor 11. All steps performed by the client 100, the broker 102 and the server 104 are performed by the processor 11 processing program and data stored in the memory 12.

The process of the invention establishes a communication channel between the client 100 and the server 104 via the broker 102. Although there are systems in which a client 100 accesses a server 104 directly, this is not useful in any situation. If the client 100 wants to access the server 104 directly, then the address of the server 104 has to be known to the client 100. This is hard to achieve if it is not updated on the regular basis. Further, the server 104 might use a firewall, which filters the incoming data based on the address of the sender. If the client change the location, the address changes and the attempt of the client 100 to reach the server 104 may be blocked by a firewall of the server. Therefore it is useful to use a broker device 102, which is accessed by the client 100 and accessed by the server 104 to establish communication channels which is then used to establish a communication channel between the client 100 and the server 104.

To secure the communication channel between the client 100 and the server 104 they must share information that is not known to the broker device 102. To establish such shared information client 100 and server 104 follow the steps of a pairing process, which only involves the client 100 and the server 104.

Figure 2 shows the steps of this pairing process for server 104 and client 100. For the pairing process, client 100 and server 104 have to be enabled to communicate directly to each other. For this paring client 100 and server 104 are located in close proximity to each other, to allow a direct communication using some close proximity wireless communication or some wire based communication in a local network. Server is then in a first step 200 brought into a pairing mode, either automatically or upon a certain machine trigger or manually by a human. This can happen for example by an action of an owner of the server 104 and the client device 100. The client device can then in a second step 201 discover the server in the local (wireless) network and then initiate a direct communication between the client 100 and the server 104. In a further step 202, the client 100 generates a credential information, which is then send to the server in the step 203. The credential information is an information that is kept secret, like a user-password combination or encryption keys like symmetric or asymmetric (public-private key pair). This information is only shared by client 100 and server104. This information will be used in a later communication between the client 100 and server 104, kept secret, and especially not shard with the broker 102. In the step 204, the server 104 stores the credential information received in step 203 and generates in the following step 205 a unique access information for the client 100. In step 206, the server 104 sends the unique access information to the client 100 who stores this information in step 207. With step 208, client 100 and server 104 terminate the pairing phase. As result of this pairing phase, the client 100 and the server 104 both have in their memory 12 the credential information and the unique access information. These two information can be used to enable a further communication process with using a broker as an intermediate means. Because of this information, they can exclude the broker 102 from any access of this communication channel between client 100 and server 104, since the broker 102 has no knowledge of the credential information.

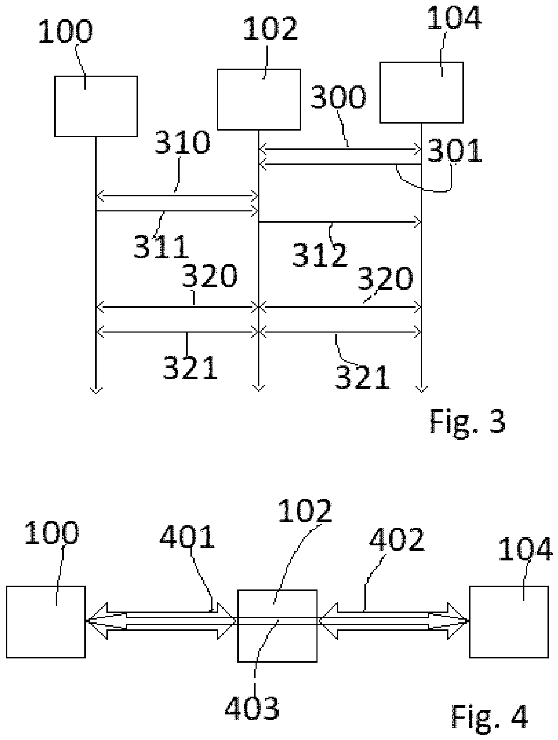

Figure 3 shows the process to establish the third communication channel between the client 100 and the server 104 via the broker 102. The process starts with step 300 in which the server 104 initiates and establishes a secure encrypted and authenticated communication channel 200 with the broker 102. For the further description, this communication channel is addressed as second communication channel. This step 300 is initiated only by the server 104 and not by the broker 102. Since server 104 starts this connection 300 by an outgoing communication to the broker 102, typical restriction about incoming messages, for example a firewall policy of the server 102, do not apply. Server 104 and broker 102 establish a secure communication channel typically by websocket protocol secure communication, which is authenticated and encrypted. It is an advantage of the websocket protocol that the established communication channel can be used by both sides as long as this communication channel is not interrupted. If for some reason this communication channel is interrupted, it has to be re-established by a process initiated by the server 104 and cannot be re-established by the broker 102. Such an interruption could happen, if the server 104 is shut off for a short period, for example by a power failure. The server 104 has then actively re-establish this communication channel between the server 104 and the broker 102. Over this communication channel, the server 104 sends the access information or some other information, which allows identifying the access information, which has been stored in the client 100 during the pairing phase. The broker 102 therefore receives either a copy of the unique access information given to the client 100 during the pairing phase or some signature or hash value which allows checking the valid unique access information stored in the client 100. Further, the broker gets the address of the server, which allows the broker to communicate with the server whenever it is useful or initiated by some event. Such an event can be the request of a client 100 to establish a communication channel with the server 104, as shown in the following steps.

In step 310, the client 100 initiates an encrypted and authenticated communication channel between the client 100 and the broker 102. This communication channel can again be established by the websocket protocol. Once the connection channel is established, the client sends in step 311 the unique access information, which was stored in step 207 of the pairing phase of figure 2 in the client 100. With sending this information the client 100 request to establish a communication channel with the server 104.The broker 102 receives this unique access information, compares this information with the information received in step 301, and thereby identifies to which server 104 the client 100 wants to establish a communication channel. The broker can also perform further authentication steps to check the authorization of the client to request such a communication channel. The broker 102 then forwards this unique access information in step 312 to the server 104, using the address given by the server during step 301. Since the unique access information was given to only one client, the server 104 can select the appropriate credentials for this specific client 100. The server 104 and the client 100 then establish in step 320 a communication channel, which allows an authenticated and encrypted communication between the client 100 and the server 104. The communication channel such established uses the credential information of client 100, which was given to the server 104 in step 203 of figure 2.

Using this credential information the communication channel between client 100 and server 104 is end to end encrypted such that the broker 102 has no access to a content of this communication channel. This communication channel can again be established using the websocket protocol.

This such established communication channel is then used in step 321 for the communication between client 100 and server 104 via the broker 102. If the client 100 wants to send a data package to server 104 this data package is encrypted with the credential information shared by client 100 and server 104 in a first step and in a second step encrypted again with the key used for the communication between the client 100 and the broker 102. The broker 102 receives this data package and decrypts this data package with the key used for the communication channel between client 100 and broker 102. This data package is still encrypted with the key shared by client 100 and server 104. It is then encrypted again by the broker 102 to be send to the server 104 using the key shared by broker 102 and server 104. The server receives this data package, does a first decryption using the key for the broker 102 to server 104 communication channel, and then decrypted again, using the key for the communication channel between client 100 and server 104. By this encryption with two keys and decryptions with two keys, the communication between client 100 and server 104 is protected such that the content of this communication is not accessible by the broker 102, which means that the data "tunnel" through the broker 102.

Figure 4 shows a further schematic of these information channels between client 100, broker 102 and server 104. A first communication channel 401 is between client 100 and broker 102. This communication channel terminates in client 100 and broker 102. A second communication channel terminates in broker 102 and server 104. A third communication channel 403 terminates in client 100 and server 104. This third communication channel 403 "tunnels" through the broker 102 in the sense, that the content of this third communication channel 403 is not accessible by the broker 102. Since this third communication channel 403 is packaged in the first communication channel 401 and the second communication channel 402 this third communication channel 403 is also referred to be an inner communication channel, whereas the first and second communication channels 401, 402 are referred to as being the outer communication channels.

## Claims

1. Process to establish a communication channel between a client (100) and a server (104) via a broker (102), wherein the client (100) and the broker (102) establish a protected first communication channel (401), within the first communication channel (401) the client (100) submits a request to establish a communication channel with the server (104), the broker (102) and the server (104) establish a protected second communication channel (402), within the second communication channel (402) the request of the client (100) is forwarded to the server (104), and the client (100) and the server (104) establish a third protected communication channel (403) via the broker (102), wherein the third communication channel (403) is protected such that, the broker (102) has no access to a contend of the third communication channel (403).

2. Process of claim 1, wherein the client (100) submits a unique access information with the request to establish a communication channel with the server (104), the broker (102) identifies the server (104) based on the unique access information and transmits the request to the server (104).

3. Process of claim 2, wherein a verification information is retrieved from a memory (12) of the broker (102) and used to verify the unique access information submitted by the client (100), and if the unique access information is successfully verified, the request is forwarded by the broker (102) to the server (104) over the second communication channel (402).

4. Process of claim 3, wherein the request is forwarded by the broker (102) to the server (104) over the second communication channel (402) only if further authentication data supplied by the client (100) are verified by the broker (102).

5. Process of claim 3 or 4, wherein the verification information was send to the broker (102) by the server (104) over the second communication channel (402) before the request of the client (100) to establish a communication channel with the server (104).

6. Process of any preceding claim, wherein the third communication channel (403) is established using a credential information, which is stored in the server (104) and the client (100).

7. Process of any preceding claim, wherein the first, second and third communication channels (401, 402, 403) are protected by an authentication and an encryption, especially by a websocket protocol.

8. Process of claims 6 or 7, wherein before the client (100) submits the request to establish a communication with the server (104) to the broker (102), the client and the server performed steps to generate and store credential information in the client and the server.

9. Process of claim 8, wherein the step to generate and store credential information is performed by initiating a direct trusted communication channel of client (100) and server (104), client (100) and/or server (104) generate the credential information and using the direct trusted communication channel to store the credential information in the client (100) and the server (104).

10. Process of claim 8, wherein the step to generate and store credential information is performed by initiating trusted communication channels of client (100) and server (104) to a trust center, the trust center generates the credential information and uses the trusted communication channels to store the credential information in the client (100) and the server (104).
